(19) Europäisches Patentamt
European Patent Office
Office européen des brevets

(11) Veröffentlichungsnummer: **0 020 305**
**B1**

(12) # EUROPÄISCHE PATENTSCHRIFT

(45) Veröffentlichungstag der Patentschrift: **04.08.82**

(51) Int. Cl.³: **C 09 B 1/514,** C 09 B 1/51, C 08 L 67/02

(21) Anmeldenummer: **80810175.2**

(22) Anmeldetag: **27.05.80**

(54) **1-Hydroxy-4-hetero-arylamino-anthrachinon-Farbstoffe, deren Herstellung und deren Verwendung beim Färben von Polyestern in der Masse.**

(30) Priorität: **30.05.79 CH 5035/79**

(43) Veröffentlichungstag der Anmeldung: **10.12.80 Patentblatt 80/25**

(45) Bekanntmachung des Hinweises auf die Patenterteilung: **04.08.82 Patentblatt 82/31**

(84) Benannte Vertragsstaaten: **DE**

(56) Entgegenhaltungen:
**FR-A-1 292 734**
**FR-A-1 429 358**
**FR-A-2 187 851**

**Die Akte enthält technische Angaben, die nach dem Eingang der Anmeldung eingereicht wurden und die nicht in dieser Patentschrift enthalten sind.**

(73) Patentinhaber: **CIBA-GEIGY AG, Patentabteilung Postfach, CH-4002 Basel (CH)**

(72) Erfinder: **Jost, Max, Rebgartenweg 20, CH-4104 Oberwil (CH)**

EP 0 020 305 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# 1-Hydroxy-4-hetero-arylamino-anthrachinon-Farbstoffe, deren Herstellung und deren Verwendung beim Färben von Polyestern in der Masse

Die vorliegende Erfindung betrifft neue 1-Hydroxy-4-hetero-arylamino-anthrachinone für die Färbung von PES in der Masse.

Aus der GB-A-1 409 941 sind 1-Hydroxy-4-phenylaminoanthrachinone bekannt, die zur Färbung von PES in der Masse verwendet werden können. Die erhaltenen blauen bis violetten Färbungen sind jedoch bezüglich Lichtechtheit und Nuancenreinheit nicht ganz befriedigend. Die FR-A-2 187 851 beschreibt 1-Hydroxyanthrachinonfarbstoffe, die in 4-Stellung durch eine Phthalimidgruppe und in 5-/8-Stellung durch eine OH- und eine $NH_2$-Gruppe substituiert sind, zum Färben von linearen aromatischen Polyestern. Die FR-A-1 292 734 offenbart Anthrachinonfarbstoffe, die in 4-Stellung eine heterocyclisch substituierte Phenylaminogruppe aufweisen, wobei der Heterocyclus mindestens ein N-Atom aufweisen muß und Carbonylgruppen und/oder weitere Heteroatome, wie O, N, S oder $SO_2$, enthalten kann. Die Anthrachinonfarbstoffe gemäß FR-A-1 292 734 können in 5-/8-Stellung unsubstituiert sein oder für Anthrachinone übliche Substituenten, wie Halogenatome, Hydroxyl-, Nitro- oder gegebenenfalls substituierte Aminogruppen, aufweisen. Der Substituent in 1-Stellung kann eine gegebenenfalls verätherte Hydroxylgruppe oder eine gegebenenfalls substituierte Aminogruppe sein. Diese Farbstoffe eignen sich zum Färben von hydrophoben Materialien, wie Celluloseacetat, Polyamiden und insbesondere aromatischen Polyestern.

Es wurden nun neue 1-Hydroxy-4-heteroarylaminoanthrachinone gefunden, die sich bei der Massefärbung von PES durch überraschend gute Nuancenreinheit und Lichtechtheit auszeichnen.

Die Erfindung betrifft demnach 1-Hydroxy-4-heteroarylaminoanthrachinone der Formel I

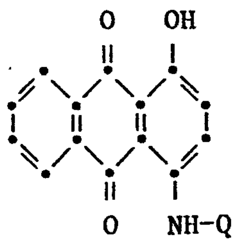

(I)

worin Q eine Gruppe der Formel II

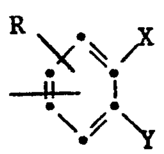

(II)

bedeutet, worin

R Wasserstoff, Halogen, $C_1-C_4$ Alkyl, $C_1-C_4$ Alkoxy ist,

X einer der heterocyclischen Reste der Formeln

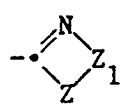 , 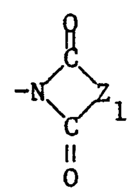 ,

(III) (IV)

bedeutet, worin Z —O— oder —S— ist,

$Z_1$ Äthylen, Vinylen, gegebenenfalls durch Halogen, $C_1-C_4$ Alkyl, $C_1-C_4$ Alkoxy, $-SO_2CH_3$ oder $-SO_2NH_2$ substituiertes o-Phenylen oder eine über das C-Atom an Z gebundene Gruppe $-C(R_1)=N-$ bedeutet und

$R_1$ Wasserstoff, $C_1-C_4$ Alkyl oder Phenyl bedeutet,

Y Wasserstoff ist oder X und Y zusammen mit dem Benzolring an dem sie gebunden sind ein heterocyclisches System der Formel V

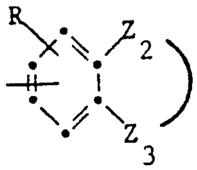

(V)

bilden, worin R die oben angegebene Bedeutung hat, $Z_2$ —O— oder —CO— und $Z_3$, wenn $Z_2$ —O— ist, eine über das C-Atom an $Z_2$ gebundene Gruppe $-N{=}C(R_1)-$ und wenn $Z_2$ —CO— ist, eine über das N-Atom an $Z_2$ gebundene Gruppe $-CO-N(R_1)-$ bedeuten.

Stellen etwaige Substituenten Halogen dar, so handelt es sich insbesondere um Chlor oder Brom. Stellen etwaige Substituenten $C_1-C_4$ Alkyl dar, so bedeuten sie beispielsweise Methyl, Äthyl, n-Propyl, Isopropyl, n-Butyl oder tert.-Butyl, vorzugsweise jedoch Methyl.

Bedeuten etwaige Substituenten $C_1-C_4$ Alkoxy, so handelt es sich beispielsweise um Methoxy, Äthoxy, n-Propoxy, Isopropoxy, n-Butoxy oder tert.-Butoxy, aber insbesondere um Methoxy.

Beispiele für heterocyclische Reste der Formel III sind solche der Formeln

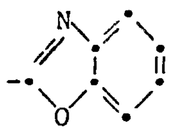

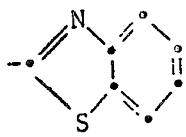

und deren im Phenylkern durch Halogen, $C_1-C_4$ Alkyl, $C_1-C_4$ Alkoxy, $-SO_2CH_3$ oder $-SO_2NH_2$ substituierten Derivate oder solche der Formeln

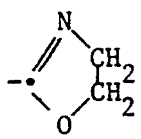

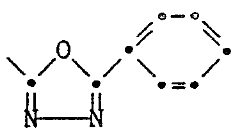

Beispiele für heterocyclische Systeme der Formel V sind solche der Formeln

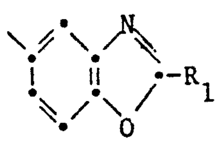

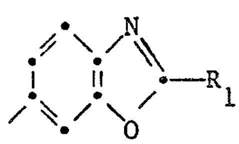

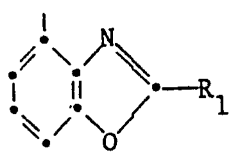

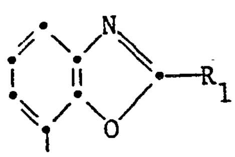

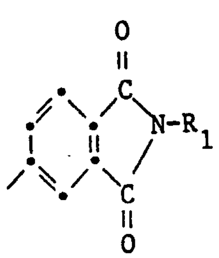

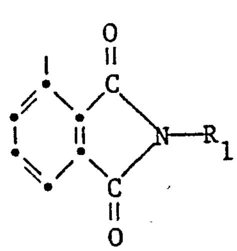

und deren im Phenylkern durch Halogen, $C_1-C_4$ Alkyl oder $C_1-C_4$ Alkoxy substituierten Derivate.

In den angegebenen Formeln hat $R_1$ die oben angegebene Bedeutung.

Von Interesse sind insbesondere Anthrachinonfarbstoffe der Formel I, worin Q eine Gruppe der Formel VI

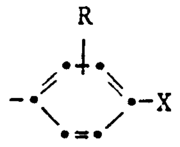

(VI)

bedeutet, worin R und X die oben angegebene Bedeutung haben.

Von ganz besonderem Interesse sind Anthrachinonfarbstoffe der Formel I, worin Q eine Gruppe der Formel VII

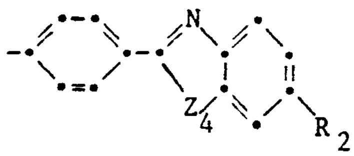

(VII)

bedeutet, worin $Z_4$ $-O-$ oder $-S-$ bedeutet und $R_2$ Wasserstoff oder $C_1-C_4$ Alkyl, insbesondere Methyl ist.

Ganz besonders bevorzugt ist der 1-Hydroxy-4-heteroarylaminoanthrachinonfarbstoff der Formel I, worin Q einen Rest der Formel

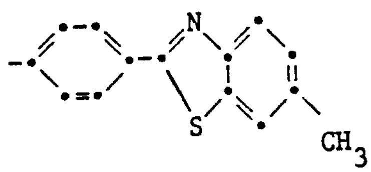

bedeutet.

Die erfindungsgemäßen 1-Hydroxy-4-heteroarylaminoanthrachinonfarbstoffe können nach bekannten Verfahren hergestellt werden, vorzugsweise dadurch, daß man eine Mischung von 1,4-Dihydroxyanthrachinon und 1,4-Dihydroxy-2,3-dihydroanthrachinon im Molverhältnis von 3,8 bis 4,2 : 1,2 bis 0,8 in Gegenwart von Borsäure und Lösungsmittel bei 70 bis 100°C mit einem Amin der Formel $Q-NH_2$, worin Q die obengenannte Bedeutung hat, umsetzt. Weitere bekannte Herstellungsmethoden gehen von 1-Hydroxy-4-aminoanthrachinon aus, durch Umsetzung entweder mit einem Chlor- oder Bromderivat der Formel $Q-Cl$ bzw. $Q-Br$ in Nitrobenzol bei 180 bis 210°C in Gegenwart von Kupfer-I-chlorid und Soda oder mit einem Amin der Formel $Q-NH_2$ in alkoholischer Lösung bei gleichzeitiger Reduktion, beispielsweise wie im Beispiel 1 der DE-B-1 644 620 beschrieben ist. Alle Ausgangsstoffe sind an sich bekannt.

Die erfindungsgemäßen Anthrachinonfarbstoffe eignen sich zur Färbung linearer Polyester in der Masse.

Als lineare Polyester seien insbesondere jene erwähnt, die durch Polykondensation von Terephthalsäure oder deren Estern mit Glykolen der Formel $HO-(CH_2)_n-OH$, worin n die Zahl 2 bis 10 bedeutet, oder mit 1,4-Di(hydroxymethyl)cyclohexan oder durch Polykondensation von Glykoläthern von Hydroxybenzoesäuren, beispielsweise p-($\beta$-Hydroxyäthoxy)-benzoesäure erhalten werden. Der Begriff lineare Polyester umfaßt auch Copolyester, die durch teilweisen Ersatz der Terephthalsäure durch eine andere Dicarbonsäure und/oder durch teilweisen Ersatz des Glykols durch ein anderes Diol erhalten werden.

Von besonderem Interesse sind jedoch die Polyäthylenterephthalate.

Die Färbung erfolgt nach den üblichen Verfahren, beispielsweise durch Mischen der Farbstoffe mit dem Kunststoffgranulat oder -pulver und Extrudieren der Mischung zu Fasern, Folien oder Granulaten. Letztere können dann im Spritzgußverfahren zu Gegenständen verformt werden.

Die erfindungsgemäßen Farbstoffe können auch in den Präparaten zur Färbung von Polyester in der Schmelze, wie sie beispielsweise im GB-A-1 398 352 beschrieben sind, eingearbeitet werden.

Schließlich kann die zu färbende Substanz auch direkt dem geschmolzenen Polyester oder auch vor oder während der Polykondensation zugegeben werden.

Das Verhältnis von Farbstoff zum Polyester kann, je nach der gewünschten Farbstärke, innerhalb weiterer Grenzen schwanken. Im allgemeinen empfiehlt sich die Verwendung von 0,01 bis 3 Gew.-Teilen Farbstoff auf 100 Gew.-Teile Polyester. Anstelle einheitlicher Farbstoffe der Formel I, können auch deren Mischungen, sowie Mischungen von Farbstoffen der Formel I mit anderen Farbstoffen verwendet werden.

Die so behandelten Polyesterteilchen werden nach bekannten Verfahren im Extruder geschmolzen und zu Gegenständen, insbesondere Folien oder Fasern, ausgepreßt oder zu Platten gegossen.

Die Farbstoffe der Formel I besitzen die für die Färbung von PES in der Masse erforderliche Thermostabilität, und die erhaltenen Färbungen zeichnen sich durch überraschend gute Lichtechtheit und Nuancenreinheit aus, sowie durch gute Wasch-, Trockenreinigungs-, Überfärbe-, Thermofixier- und Ausblutechtheit, gute Reibechtheit nach Thermofixierung bzw. nach Thermofixierung und Nachfixierung, durch reine Farbtöne, gute Farbstärke und Brillianz.

In den nachfolgenden Beispielen bedeuten die Teile Gewichtsteile und die Prozente Gewichtsprozente und die Temperaturen sind in Celsiusgraden angegeben.

## Beispiel 1

38,4 Teile 1,4-Dihydroxyanthrachinon, 9,6 Teile 2,3-Dihydro-1,4-dihydroxyanthrachinon, 57,5 Teile 2-(4'-Aminophenyl)-6-methylbenzthiazol und 53,5 Teile Borsäure werden in 400 Teilen Isopropanol 20 Stunden bei 80 bis 82° verrührt. Das ausgefallene Reaktionsprodukt der Formel

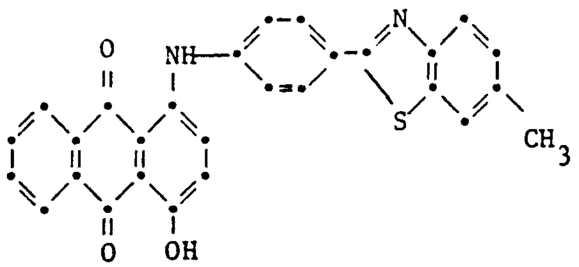

wird abfiltriert, mit Isopropanol sowie heißem Wasser gewaschen und getrocknet. Man erhält 86 Teile, d. h. 93% der Theorie des blauen Farbkörpers.

Nötigenfalls kann das Reaktionsprodukt z. B. durch Auskochen mit Isopropanol weiter gereinigt werden.

## Beispiel 2

Verwendet man anstelle der in Beispiel 1 verwendeten Base eine äquivalente Menge 2-Methyl-6-aminobenzoxazol, so erhält man den blauen Farbstoff der Formel

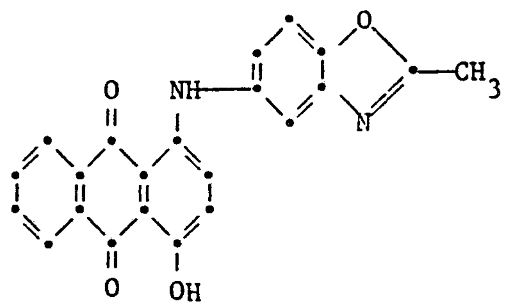

mit einer Ausbeute von 82%.

## Beispiel 3

16,8 Teile 2-(4'-Bromphenyl)-6-methylbenzthiazol, 12,0 Teile 1-Amino-4-hydroxyanthrachinon und 8 Teile Natriumcarbonat werden in 240 Teilen Nitrobenzol suspendiert. Bei 190° werden der Suspension 0,6 Teile Kupfer(I)-chlorid zugefügt. Das Reaktionsgemisch wird so lange bei 190 bis 195° gerührt, bis das Ausgangsmaterial verschwunden ist. Das Umsetzungsprodukt wird aus dem erkalteten Reaktionsgemisch abfiltriert, mit etwas Nitrobenzol, darauf mit Äthanol und heißem Wasser gewaschen und schließlich mit verdünnter Salzsäure aufgekocht. Das Umsetzungsprodukt schmilzt nach der Kristallisation aus o-Dichlorbenzol bei 265 bis 267°, es entspricht dem nach Beispiel 1 erhaltenen Farbkörper.

Beispiel 4

Ein zur Faserherstellung geeignetes unmattiertes Polyäthylenterephthalat-Granulat wird in einem verschließbaren Gefäß zusammen mit 1% des Farbkörpers gemäß Beispiel 1 auf einer Schüttelmaschine 15 Minuten geschüttelt. Die gleichmäßig gefärbten Granulatkörner werden auf einer Schmelzspinnanlage (285° ± 3°, Verweilzeit in der Spinnmaschine ca. 5 Minuten) zu Fäden versponnen, die auf einer Streckzwirnanlage verstreckt und aufgespult werden. Man erhält infolge der Löslichkeit des Farbstoffs in Polyäthylenterephthalat eine kräftige blaue Färbung, die sich durch gute Lichtechtheit, vorzügliche Wasch-, Trockenreinigung-, Überfärbe-, Sublimations- und Reibechtheit nach Thermofixierung und gute Faserviskositätswerte auszeichnet.

Beispiel 5

1000 Teile Polyäthylenterephthalat-Granulat, 10 Teile Titanoxid (Kronos RN 40®) und 1 Teil des fein verteilten Farbkörpers gemäß Beispiel 1 werden in einem verschlossenen Gefäß 2 Stunden auf dem Rollbock vermischt. Das eingefärbte Granulat wird bei ca. 260° in Strängen von 2 mm extrudiert und wieder granuliert. Das erhaltene Granulat wird im Ankerschneckenspritzgußautomat bei 270 bis 280° zu Formlingen verspritzt. Man erhält einen blaugefärbten Formling von guter Lichtechtheit.

Durch Verwendung der nachfolgend aufgeführten Farbstoffe gemäß Beispiel 4 erhält man ebenfalls Polyester-Färbungen von vorzüglichen Eigenschaften:

| Beispiel | 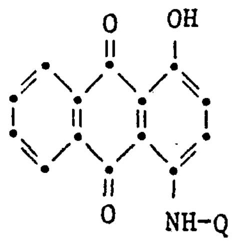 worin Q | Nuance der Polyäthylenterephthalat-Färbung |
|---|---|---|
| 6 | 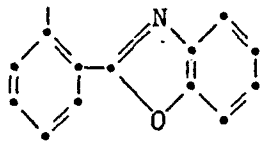 | blau |
| 7 | 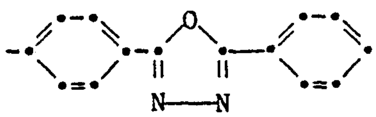 | blau |
| 8 | 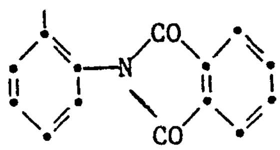 | violett |
| 9 | 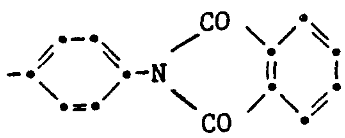 | blau |
| 10 | 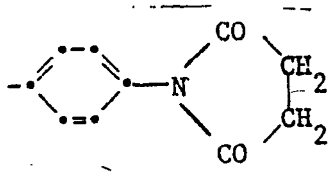 | blau |
| 11 | 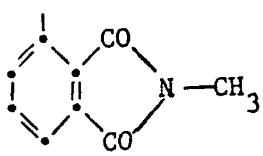 | bordeaux |

**Patentansprüche**

1. 1-Hydroxy-4-heteroarylamino-anthrachinonfarbstoffe der Formel I

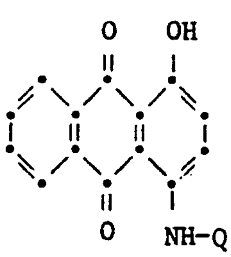

(I)

worin Q eine Gruppe der Formel II

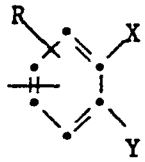

(II)

bedeutet, worin

R Wasserstoff, Halogen, $C_1-C_4$ Alkyl, $C_1-C_4$ Alkoxy ist,
X einer der heterocyclischen Reste der Formeln

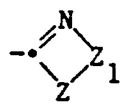

,

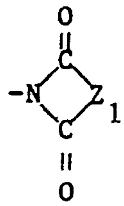

(III) (IV)

bedeutet, worin Z —O— oder —S— ist, $Z_1$ Äthylen, Vinylen, gegebenenfalls durch Halogen, $C_1-C_4$ Alkyl, $C_1-C_4$ Alkoxy, $-SO_2CH_3$ oder $-SO_2NH_2$ substituiertes o-Phenylen oder eine über das C-Atom an Z gebundene Gruppe $-C(R_1)=N-$ bedeutet und $R_1$ Wasserstoff, $C_1-C_4$ Alkyl oder Phenyl bedeutet, Y Wasserstoff ist oder X und Y zusammen mit dem Benzolring an dem sie gebunden sind ein heterocyclisches System der Formel V

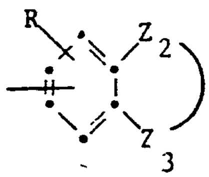

(V)

bilden, worin R die oben angegebene Bedeutung hat, $Z_2$ —O— oder —CO— und $Z_3$, wenn $Z_2$ —O— ist, eine über das C-Atom an $Z_2$ gebundene Gruppe $-N=C(R_1)-$ und, wenn $Z_2$ —CO— ist, eine über das N-Atom an $Z_2$ gebundene Gruppe $-CO-N(R_1)-$ bedeuten.

2. 1-Hydroxy-4-heteroarylamino-anthrachinonfarbstoffe gemäß Anspruch 1 der Formel I, worin Q eine Gruppe der Formel VI

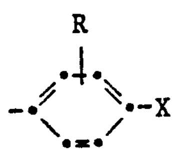

(VI)

bedeutet, worin R und X die in Anspruch 1 angegebene Bedeutung haben.

3. 1-Hydroxy-4-heteroarylamino-anthrachinonfarbstoffe gemäß Anspruch 1 der Formel I, worin Q eine Gruppe der Formel VII

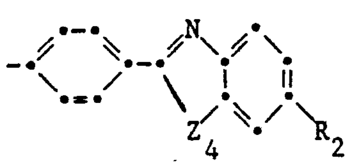

(VII)

bedeutet, worin $Z_4$ —O— oder —S— bedeutet und $R_2$ Wasserstoff oder $C_1-C_4$ Alkyl ist.

4. 1-Hydroxy-4-heteroarylamino-anthrachinonfarbstoffe gemäß Anspruch 1 der Formel I, worin Q eine Gruppe der Formel VIII

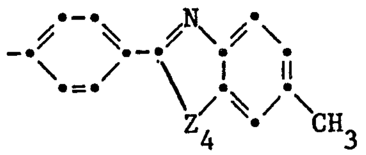

(VIII)

bedeutet, worin $Z_4$ —O— oder —S— bedeutet.

5. Der 1-Hydroxy-4-heteroarylamino-anthrachinonfarbstoff gemäß Anspruch 1 der Formel I, worin Q eine Gruppe der Formel

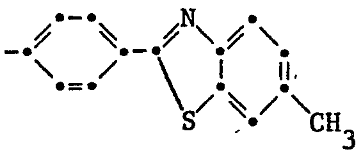

bedeutet.

6. Verfahren zur Herstellung der 1-Hydroxy-4-heteroarylamino-anthrachinonfarbstoffe der Formel I gemäß Anspruch 1, dadurch gekennzeichnet, daß man eine Mischung von 1,4-Dihydroxyanthrachinon und 1,4-Dihydroxy-2,3-dihydroanthrachinon im Molverhältnis 3,8 bis 4,2 : 1,2 bis 0,8 in Gegenwart von Borsäure und Lösungsmittel bei 70 bis 100°C mit einem Amin der Formel $Q—NH_2$, worin Q die in Anspruch 1 angegebene Bedeutung hat, umsetzt.

7. Verfahren zum Färben von Polyestern in der Masse, dadurch gekennzeichnet, daß man einen 1-Hydroxy-4-heteroarylamino-anthrachinonfarbstoff der Formel I gemäß Anspruch 1 verwendet.

8. Die gemäß Anspruch 7 erhaltenen gefärbten Polyester.

**Claims**

1. A 1-hydroxy-4-heteroarylaminoanthraquinone of the formula

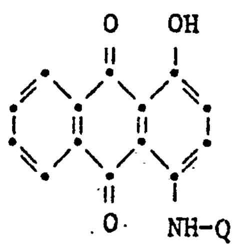

(I)

wherein Q is a group of the formula II

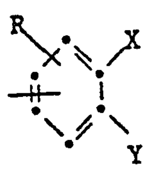

(II)

wherein

R is hydrogen, halogen, $C_1—C_4$alkyl, $C_1—C_4$alkoxy,
X is one of the heterocyclic radicals of the formulae

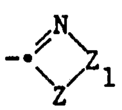 ,

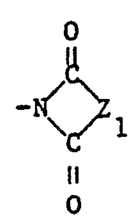

(III) (IV)

wherein Z is —O— or —S—, $Z_1$ is ethylene, vinylene, o-phenylene which is unsubstituted or substituted by halogen, $C_1$—$C_4$alkyl, $C_1$—$C_4$alkoxy, $-SO_2CH_3$ or $-SO_2NH_2$, or is a $-C(R_1)=N-$ group which is linked to Z through the carbon atom, and $R_1$ is hydrogen, $C_1$—$C_4$alkyl or phenyl, Y is hydrogen, or X and Y togehter with the benzene ring to which they are attached form a heterocyclic system of the formula V

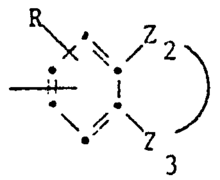

(V)

wherein R has the above meaning, $Z_2$ is —O— or —CO—, and, if $Z_2$ is —O—, $Z_3$ is a group $-N=C(R_1)-$ which is linked to $Z_2$ through the carbon atom, and, if $Z_2$ is —CO—, is a group $-CO-N(R_1)-$ which is linked to $Z_2$ through the nitrogen atom.

2. A 1-hydroxy-4-heteroarylaminoanthraquinone according to claim 1 of the formula I, wherein Q is a group of the formula VI

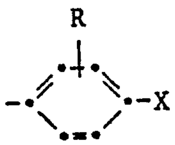

(VI)

wherein R and X are as defined in claim 1.

3. A 1-hydroxy-4-heteroarylaminoanthraquinone according to claim 1 of the formula I, wherein Q is a group of the formula VII

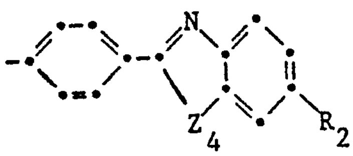

(VII)

wherein $Z_4$ is —O— or —S—, and $R_2$ is hydrogen or $C_1$—$C_4$alkyl.

4. A 1-hydroxy-4-heteroarylaminoanthraquinone according to claim 1 of the formula I, wherein Q is a group of the formula VIII

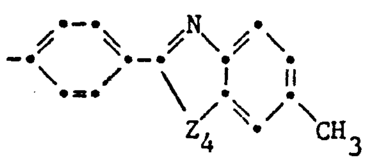

(VIII)

wherein $Z_4$ is —O— or —S—.

5. The 1-hydroxy-4-heteroarylaminoanthraquinone according to claim 1 of the formula I, wherein Q is a group of the formula

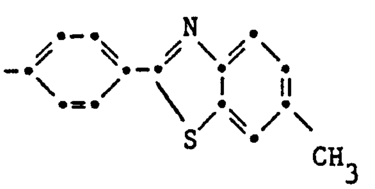

6. A process for the production of a 1-hydroxy-4-heteroarylaminoanthraquinone of the formula I according to claim 1, which process comprises reacting a mixture of 1,4-dihydroxyanthraquinone and 1,4-dihydroxy-2,3-dihydroanthraquinone in the molar ratio of 3.8 to 4.2 : 1.2 to 0.8, in the presence of boric acid and solvent at 70° to 100° C, with an amine of the formula $Q-NH_2$, wherein Q is as defined in claim 1.

7. A process for the mass colouration of polyesters, which comprises the use of a 1-hydroxy-4-heteroarylaminoanthraquinone of the formula I according to claim 1.

8. The coloured polyesters obtained according to claim 7.

**Revendications**

1. Colorants hydroxy-1 hétéroarylamino-4 anthraquinoniques répondant à la formule I

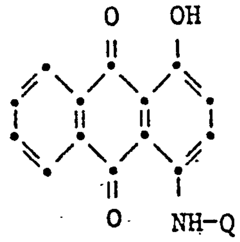

(I)

dans laquelle Q représente un radical répondant à la formule II

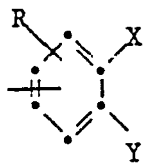

(II)

dans laquelle

R représente l'hydrogène, un halogène, un alkyle en $C_1-C_4$ ou un alcoxy en $C_1-C_4$,
X représente un radical hétérocyclique répondant à l'une des formules suivantes

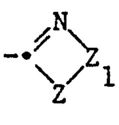 , 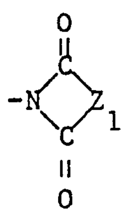

(III) (IV)

dans lesquelles Z représente $-O-$ ou $-S-$, $Z_1$ représente un radical éthylène, un radical vinylène, un radical o-phénylène éventuellement porteur d'un halogène, d'un alkyle en $C_1-C_4$, d'un alcoxy en $C_1-C_4$, d'un groupe $-SO_2CH_3$ ou d'un groupe $-SO_2NH_2$, ou un groupe $-C(R_1)=N-$ uni à Z par l'atome de carbone, et $R_1$ représente l'hydrogène, un alkyle en $C_1-C_4$ ou un phényle, et

Y représente l'hydrogène ou
X et Y forment ensemble et avec le noyau benzénique auquel ils sont liés un système hétérocyclique répondant à la formule V

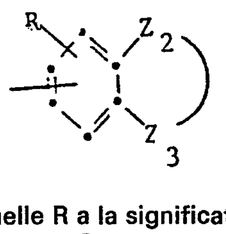

(V)

dans laquelle R a la signification donnée ci-dessus, $Z_2$ représente $-O-$ ou $-CO-$ et $Z_3$ représente, lorsque $Z_2$ est $-O-$, un groupe $-N=C(R_1)-$ uni à $Z_2$ par l'atome de carbone et, lorsque $Z_2$ est $-CO-$, un groupe $-CO-N(R_1)-$ uni à $Z_2$ par l'atome d'azote.

2. Colorants hydroxy-1 hétéroarylamino-4 anthraquinoniques de formule I selon la revendication 1, dans lesquels Q représente un radical répondant à la formule VI

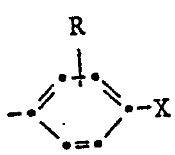

(VI)

dans laquelle R et Y ont les significations données à la revendication 1.

3. Colorants hydroxy-1 hétéroarylamino-4 anthraquinoniques de formule I selon la revendication 1, dans lesquels Q représente un radical répondant à la formule VII

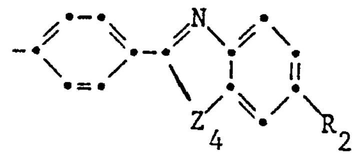

(VII)

dans laquelle $Z_4$ représente —O— ou —S— et $R_2$ représente l'hydrogène ou un alkyle en $C_1-C_4$.

4. Colorants hydroxy-1 hétéroarylamino-4 anthraquinoniques de formule I selon la revendication 1, dans lesquels Q représente un radical répondant à la formule VIII

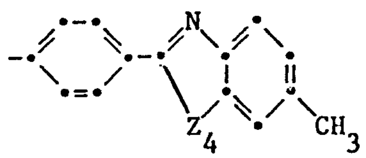

(VIII)

dans laquelle $Z_4$ représente —O— ou —S—.

5. Colorant hydroxy-1 hétéroarylamino-4 anthraquinonique de formule I selon la revendication 1, dans lequel Q représente un radical de formule:

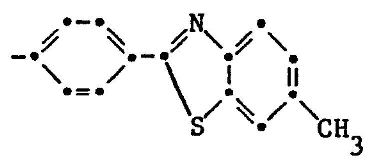

.

6. Procédé de préparation des colorants hydroxy-1 hétéroarylamino-4 anthraquinoniques de formule I selon la revendication 1, procédé caractérisé en ce qu'on fait réagir un mélange de dihydroxy-1,4 anthraquinone et de dihydroxy-1,4 dihydro-2,3 anthraquinone dans un rapport molaire compris entre 3,8 : 1,2 et 4,2 : 0,8, en présence d'acide borique et d'un solvant, à une température de 70 à 100° C, avec une amine de formule $Q-NH_2$ dans laquelle Q a la signification donnée à la revendication 1.

7. Procédé pour teindre des polyesters dans la masse, procédé caractérisé en ce qu'on utilise un colorant hydroxy-1 hétéroarylamino-4 anthraquinonique de formule I selon la revendication 1.

8. Polyesters qui ont été teints selon la revendication 7.